# EUROPEAN PATENT APPLICATION

(11) **EP 4 563 728 A1**
(43) Date of publication of application: **04.06.2025**
(21) Application number: 23846439.0
(22) Date of filing: 24.07.2023
(51) Int. Cl.: C25B 11/091, B01J 23/72, B01J 37/02, C22C 9/00, C23C 28/00, C25B 1/23, C25B 3/03, C25B 3/07, C25B 3/26, C25B 11/031, C25B 11/053, C25B 11/061, C25B 11/065, C25B 11/077

(54) **CATHODE ELECTRODE, COMPOSITE OF CATHODE ELECTRODE AND SUBSTRATE, ELECTROLYTIC REDUCTION DEVICE COMPRISING CATHODE ELECTRODE, AND METHOD FOR PRODUCING COMPOSITE OF CATHODE ELECTRODE AND SUBSTRATE**

(30) Priority: 29.07.2022 JP 2022121152
(71) Applicant: FURUKAWA ELECTRIC CO., LTD., Tokyo 100-8322 (JP); Chiyoda Corporation, Kanagawa 220-8765 (JP); The University of Tokyo, Bunkyo-ku, Tokyo 113-8654 (JP)
(72) Inventor: YAMAMOTO Takahiro, Tokyo 100-8322 (JP); YAMAMOTO Kiyoshi, Tokyo 100-8322 (JP); MIMURA Yu, Tokyo 100-8322 (JP); SUGIYAMA Masakazu, Tokyo 113-8654 (JP); MINEGISHI Tsutomu, Tokyo 113-8654 (JP); YAMAGUCHI Shingi, Tokyo 113-8654 (JP); MATSUMOTO Jun, Yokohama-shi, Kanagawa 220-8765 (JP); TAKEDA Dai, Yokohama-shi, Kanagawa 220-8765 (JP)
(74) Representative: Zacco GmbH
(86) International application number: PCT/JP2023/026947
(87) International publication number: WO 2024/024709

(57) **Abstract**

Provided are: a cathode electrode that can stably sustain a catalytic reaction producing an olefinic hydrocarbon such as ethylene and an alcohol such as ethanol by a reduction reaction of carbon dioxide over a long term with high efficiency; and a composite of a cathode electrode and a substrate.

A cathode electrode that electrically reduces carbon dioxide, including: copper; and at least one additive element selected from the group consisting of aluminum, boron, gallium, zinc, titanium, and silicon, wherein the copper contains: zerovalent copper; and monovalent copper and/or divalent copper.

## Description

### Technical Field

The present invention relates to a cathode electrode that can electrically reduce carbon dioxide to convert carbon dioxide into carbon monoxide, an olefinic hydrocarbon such as ethylene, and/or an alcohol, a composite of a cathode electrode and a substrate, an electrolytic reduction apparatus having a cathode electrode, and a method of manufacturing a composite of a cathode electrode and a substrate.

### Background Art

In recent years, adverse effects due to the global warming have diversely changed the global environment, and various problematic phenomena are occurring. One of the causes of the change in the global environment is considered to be a rise in concentration of greenhouse gasses in the atmosphere, specifically carbon dioxide, which mainly accounts for the greenhouse gasses. To lower the concentration of carbon dioxide in the atmosphere, not only increasing an amount of photosynthesis by new afforestation on the ground and marine algae but also actively absorbing and recovering carbon dioxide in the atmosphere have been investigated. Furthermore, not only absorbing and recovering carbon dioxide but also utilizing carbon derived from carbon dioxide as a raw material of organic compounds has been investigated.

Specifically, it has been investigated to reduce carbon dioxide and convert it into, for example, C2 compounds such as ethylene and ethanol or C1 compounds such as carbon monoxide, methane, methanol, and formic acid to be utilized for synthesizing organic compounds. Among them, specifically ethylene and ethanol, which are the C2 compounds, are significantly useful as derivatives with synthesizing various organic compounds, and have higher utility value than the C1 compounds such as carbon monoxide and methane.

In recent years, for the reduction reaction of carbon dioxide, catalysts such as photocatalysts and electrode catalysts have been commonly used, and development of a catalyst having more excellent performance is required. In a catalyst used for the reduction reaction of carbon dioxide, not only reaction efficiency but also selectivity to a specific reaction are required, and selecting a catalyst material is important from such a viewpoint (Non-Patent Literature 1). For example, from the viewpoint of efficient reductive production of carbon monoxide to increase a rate of carbon monoxide in the reduced substances, gold, silver, and zinc are used as the catalyst material. From the viewpoint of efficient reductive production of a hydrocarbon such as methane, ethane, and ethylene, copper is used as the catalyst material. Among them, copper attracts attention as an electrode catalyst for a cathode reduction of carbon dioxide because it can produce the C2 compounds such as ethylene.

Proposed as the electrode catalyst for the cathode reduction of carbon dioxide using copper is, for example, a cathode electrode for reducing carbon dioxide that inhibits diffusion of the metal element between a catalyst layer and a substrate and inhibits a side reaction of the metal and that inhibits deterioration of catalytic efficiency by forming a diffusion inhibiting layer composed of an organic material on the substrate and by forming the catalyst layer mainly composed of a metal cluster on the diffusion inhibiting layer (Patent Literature 1). Meanwhile, evaluated in Example of Patent Literature 1 is a Faraday efficiency of each product such as ethylene in the reduction reaction of carbon dioxide. In Patent Literature 1, stably sustaining the catalytic reaction producing the organic compounds such as ethylene over a long term with high selectivity to ethylene and the like is not verified.

To practically use the production of the organic compounds such as ethylene with the reduction reaction of carbon dioxide in the industry, the catalytic reaction producing the organic compounds such as ethylene is required to be stably sustained in a term as long as several hundred hours or longer with high selectivity to the organic compound such as ethylene. The cathode electrode for reducing carbon dioxide of Patent Literature 1 has room for improvement from the viewpoint of stably sustaining the catalytic reaction producing the organic compounds such as ethylene over a long term with high efficiency.

### Document List

### Patent Literature

Patent Literature 1: Japanese Patent Application Laid-Open No. 2018-168410

### Non-Patent Literature

Non-Patent Literature 1: Y Hori "Electrochemical reduction of CO at a Copper Electrode." J. Phys. Chem. B. 101(36). 7075-7081 (1997)

### Summary

### Technical Problem

Considering the above situation, it is an object of the present invention to provide a cathode electrode that can stably sustain the catalytic reaction producing an olefinic hydrocarbon such as ethylene and an alcohol such as ethanol by the reduction reaction of carbon dioxide over a long term with high efficiency, a composite of a cathode electrode and a substrate, an electrolytic reduction apparatus having a cathode electrode, and a method of manufacturing a composite of a cathode electrode and a substrate.

### Solution to Problem

The spirits of constitutions of the present invention are as follows.
[1] A cathode electrode that electrically reduces carbon dioxide, comprising:
   copper; and at least one additive element selected from the group consisting of aluminum, boron, gallium, zinc, titanium, and silicon,
   wherein the copper contains: zerovalent copper; and monovalent copper and/or divalent copper.
[2] A cathode electrode that electrically reduces carbon dioxide, comprising:
   copper; and at least one additive element selected from the group consisting of aluminum, boron, gallium, zinc, titanium, and silicon,
   wherein the copper contains: monovalent copper for reduction and/or divalent copper for reduction that are reduced to zerovalent copper by a reduction treatment; and monovalent copper and/or divalent copper that are not reduced to zerovalent copper.
[3] The cathode electrode according to [1] or [2], wherein the additive element is contained at 0.10 atom% or more and 1.0 atom% or less relative to 100 atom% of the copper.
[4] The cathode electrode according to [1] or [2], wherein the additive element is contained at 0.25 atom% or more and 0.70 atom% or less relative to 100 atom% of the copper.
[5] The cathode electrode according to [1] or [2], wherein the additive element contains aluminum.
[6] The cathode electrode according to [1] or [2], wherein the cathode electrode has a porous structure.
[7] A composite of a cathode electrode and a substrate, comprising: a substrate; and the cathode electrode according to [1] or [2] disposed on the substrate.
[8] The composite according to [7], wherein the substrate has a porous structure.
[9] The composite according to [8], wherein a material of the substrate having the porous structure is carbon.
[10] The composite according to [8], wherein a material of the substrate having the porous structure is a fluorine-containing resin.
[11] The composite according to [8], wherein a material of the substrate having the porous structure is a metal.
[12] The composite according to [11], wherein the metal is copper.
[13] The composite according to [11], wherein the metal is a sintered product of copper particles.
[14] An electrolytic reduction apparatus that electrically reduces carbon dioxide to carbon monoxide, an olefinic hydrocarbon, and/or an alcohol, comprising the cathode electrode according to [1] or [2].
[15] An electrolytic reduction apparatus that electrically reduces carbon dioxide to carbon monoxide, an olefinic hydrocarbon, and/or an alcohol, comprising the composite according to [7].
[16] A method of manufacturing a composite of a cathode electrode and a substrate that electrically reduces carbon dioxide, comprising:
   a step of providing a substrate having a porous structure; and
   a step of forming a cathode electrode including a sputtering layer forming step of forming a sputtering layer containing copper and at least one additive element selected from the group consisting of aluminum, boron, gallium, zinc, titanium, and silicon on the substrate by sputtering, wherein the copper contains: zerovalent copper; and monovalent copper and/or divalent copper.
[17] A method of manufacturing a composite of a cathode electrode and a substrate that electrically reduces carbon dioxide, comprising:
   a step of providing a substrate having a porous structure; and
   a step of forming a cathode electrode including a sputtering layer forming step of forming a sputtering layer containing copper and at least one additive element selected from the group consisting of aluminum, boron, gallium, zinc, titanium, and silicon on the substrate by sputtering, wherein the copper contains: monovalent copper for reduction and/or divalent copper for reduction that are reduced to zerovalent copper by a reduction treatment; and monovalent copper and/or divalent copper that are not reduced to zerovalent copper.
[18] The method of manufacturing a composite according to [16] or [17], further comprising a copper oxidative-treatment step of oxidizing at least a part of the copper in the sputtering layer to the monovalent copper and/or the divalent copper after the sputtering layer forming step.
[19] The method of manufacturing a composite according to [18], further comprising a partial reduction step of partially reducing the monovalent copper and/or the divalent copper oxidized in the copper oxidative-treatment step to zerovalent copper and/or monovalent copper.
[20] The method of manufacturing a composite according to [18], wherein the copper oxidative-treatment step is electroless plating.
[21] The method of manufacturing a composite according to [16] or [17], wherein the sputtering layer forming step includes: a copper sputtering layer forming step of forming a sputtering layer containing the copper by sputtering; and an additive element sputtering layer forming step of forming a sputtering layer containing the additive element on the copper sputtering layer by sputtering.
[22] The method of manufacturing a composite according to [21], further comprising a copper sputtering layer forming step of forming a sputtering layer containing the copper on the additive element sputtering layer by sputtering.

### Effects of Invention

According to an aspect of the cathode electrode of the present invention, the catalytic reaction producing an olefinic hydrocarbon such as ethylene and an alcohol such as ethanol by the reduction reaction of carbon dioxide can be stably sustained over a long term by containing copper and at least one additive element selected from the group consisting of aluminum, boron, gallium, zinc, titanium, and silicon, wherein the copper contains: zerovalent copper; and monovalent copper and/or divalent copper; or by containing copper and at least one additive element selected from the group consisting of aluminum, boron, gallium, zinc, titanium, and silicon, wherein the copper contains: monovalent copper for reduction and/or divalent copper for reduction that are reduced to zerovalent copper by a reduction treatment; and monovalent copper and/or divalent copper that are not reduced to zerovalent copper.

**In** the reduction reaction of carbon dioxide with the cathode electrode using copper as the catalyst material, a boundary portion, present in the cathode electrode, between zerovalent copper and monovalent copper is considered to function as a site where carbon derived from carbon dioxide forms a C-C bond and the C-C bond is stabilized, that is, the boundary portion between zerovalent copper and monovalent copper is a major active site of the reduction reaction of carbon dioxide. **In** the cathode electrode, monovalent copper is reduced to zerovalent copper, and divalent copper is reduced to zerovalent copper or monovalent copper during the reduction reaction of carbon dioxide. Therefore, sustaining the reduction reaction of carbon dioxide over a long term tends to decrease the boundary portion between zerovalent copper and monovalent copper due to the reduction of divalent copper to zerovalent copper or monovalent copper and the reduction of monovalent copper to zerovalent copper. However, the cathode electrode of the present invention, which contains at least one additive element selected from the group consisting of aluminum, boron, gallium, zinc, titanium, and silicon, in addition to copper, allows the additive element to have a function of holding oxygen in the cathode electrode to appropriately inhibit the reduction from monovalent copper to zerovalent copper. It is considered from the above that the cathode electrode of the present invention optimizes the existing ratio between zerovalent copper and monovalent copper to sustain generation and stabilization of the C-C bond even with the reduction reaction of carbon dioxide sustained over a long term. It is consequently considered that the cathode electrode of the present invention can stably sustain the catalytic reaction producing an olefinic hydrocarbon such as ethylene and an alcohol such as ethanol by the reduction reaction of carbon dioxide over a long term.

Note that ethylene and ethanol are both the C2 compound, and include generation of the C-C bond on the catalyst material in a middle of the reaction pathway. Therefore, the active site for ethylene generation and ethanol generation are the same as or extremely close to each other. Thus, stability of the ethylene generation and stability of ethanol generation exhibit similar tendency, and the reduction reaction of carbon dioxide similarly proceeds for both the ethylene generation and the ethanol generation.

According to an aspect of the cathode electrode of the present invention, by containing the additive element at 0.10 atom% or more and 1.0 atom% or less relative to 100 atom% of the copper, the existing ratio between zerovalent copper and monovalent copper is certainly optimized, and thereby the catalytic reaction producing an olefinic hydrocarbon such as ethylene and an alcohol such as ethanol by the reduction reaction of carbon dioxide can be further stably sustained over a long term even with the reduction reaction of carbon dioxide sustained over a long term.

According to an aspect of the cathode electrode of the present invention, by containing the additive element at 0.25 atom% or more and 0.70 atom% or less relative to 100 atom% of the copper, the existing ratio between zerovalent copper and monovalent copper can be kept within a further optimal range, and thereby the catalytic reaction producing an olefinic hydrocarbon such as ethylene and an alcohol such as ethanol by the reduction reaction of carbon dioxide can be further stably sustained over a longer term even with the reduction reaction of carbon dioxide sustained over a long term.

According to an aspect of the cathode electrode of the present invention, by the additive element containing aluminum, the function of appropriately holding oxygen in the cathode electrode can be certainly obtained, and thereby the existing ratio between zerovalent copper and monovalent copper is certainly optimized and the catalytic reaction producing an olefinic hydrocarbon such as ethylene and an alcohol such as ethanol by the reduction reaction of carbon dioxide can be further stably sustained over a long term even with the reduction reaction of carbon dioxide sustained over a long term.

According to an aspect of the cathode electrode of the present invention, contact between water and carbon dioxide in sites of the reduction reaction of carbon dioxide in the cathode electrode is facilitated by the cathode electrode having a porous structure, and thereby the catalytic reaction producing an olefinic hydrocarbon such as ethylene and an alcohol such as ethanol can be further stably sustained over a long term.

According to an aspect of the composite of a cathode electrode and a substrate of the present invention, by having the substrate and the cathode electrode of the present invention, the composite of the cathode electrode and the substrate that can stably sustain the catalytic reaction producing an olefinic hydrocarbon such as ethylene and an alcohol such as ethanol by the reduction reaction of carbon dioxide over a long term can be obtained.

According to an aspect of the composite of a cathode electrode and a substrate of the present invention, by the substrate having a porous structure, gaseous carbon dioxide can smoothly contact the cathode electrode, and thereby the catalytic reaction producing an olefinic hydrocarbon such as ethylene and an alcohol such as ethanol can be further stably sustained over a long term even with gaseous carbon dioxide.

According to the method of manufacturing a composite of a cathode electrode and a substrate of the present invention, by including the sputtering layer forming step of forming a sputtering layer containing copper and at least one additive element selected from the group consisting of aluminum, boron, gallium, zinc, titanium, and silicon on the substrate by sputtering, the composite that can stably sustain the catalytic reaction producing an olefinic hydrocarbon such as ethylene and an alcohol such as ethanol by the reduction reaction of carbon dioxide over a long term can be manufactured.

### Brief Description of Drawings

[FIG. 1] An explanatory diagram illustrating an outline of a cross section of the composite of the cathode electrode and the substrate of the present invention.
[FIG. 2] An explanatory diagram of the electropolishing treatment step in the method of manufacturing the composite of the cathode electrode and the substrate.
[FIG. 3] An explanatory diagram of the sputtering layer forming step in the method of manufacturing the composite of the cathode electrode and the substrate.
[FIG. 4] An explanatory diagram of the partial reduction step in the method of manufacturing the composite of the cathode electrode and the substrate.
[FIG. 5] An explanatory diagram illustrating an outline of the electrolytic reduction apparatus having the cathode electrode of the present invention.
[FIG. 6] An explanatory diagram illustrating an outline of another electrolytic reduction apparatus having the cathode electrode of the present invention.

### Description of Embodiments

### [Cathode Electrode]

The cathode electrode of the present invention will be described below. A first cathode electrode of the present invention, which is a cathode electrode that electrically reduces carbon dioxide, comprises: copper (Cu); and at least one additive element (M) selected from the group consisting of aluminum (Al), boron (B), gallium (Ga), zinc (Zn), titanium (Ti), and silicon (Si), wherein the copper (Cu) contains: zerovalent copper; and monovalent copper and/or divalent copper. The above first cathode electrode of the present invention contains: the copper containing zerovalent copper and monovalent copper and/or divalent copper; and the additive element (M) as essential components. From the above, in the first cathode electrode of the present invention, zerovalent copper and monovalent copper and/or divalent copper are present as the copper (Cu).

**In** the first cathode electrode, cuprous oxide (Cu₂O) can be mentioned as the monovalent copper, and copper oxide (CuO) can be mentioned as the divalent copper. A copper single substance can be mentioned as the zerovalent copper.

In the first cathode electrode of the present invention, by containing the copper (Cu) containing zerovalent copper and monovalent copper and/or divalent copper and the additive element (M) as the essential components, the additive element (M) has a function of holding oxygen in the cathode electrode, and thereby the reduction from monovalent copper to zerovalent copper is appropriately inhibited even with the reduction reaction of carbon dioxide sustained over a long term. **In** the first cathode electrode of the present invention, the reduction from monovalent copper to zerovalent copper is appropriately inhibited even with the reduction reaction of carbon dioxide sustained over a long term as noted above to optimize the existing ratio between zerovalent copper and monovalent copper, and thereby generation and stabilization of the C-C bond are sustained. As a result, the catalytic reaction producing an olefinic hydrocarbon such as ethylene and an alcohol such as ethanol by the reduction reaction of carbon dioxide can be stably sustained over a long term.

A second cathode electrode of the present invention, which is a cathode electrode that electrically reduces carbon dioxide, comprises: copper (Cu); and at least one additive element (M) selected from the group consisting of aluminum (Al), boron (B), gallium (Ga), zinc (Zn), titanium (Ti), and silicon (Si), wherein the copper (Cu) contains: monovalent copper for reduction and/or divalent copper for reduction that are reduced to zerovalent copper by a reduction treatment; and monovalent copper and/or divalent copper that are not reduced to zerovalent copper. **In** the second cathode electrode, a part of monovalent copper and/or divalent copper is reduced to zerovalent copper. From the above, in the second cathode electrode of the present invention, monovalent copper for reduction and/or divalent copper for reduction; and monovalent copper and/or divalent copper that are not reduced to zerovalent copper are present as the copper (Cu). The above second cathode electrode of the present invention contains: monovalent copper and/or divalent copper; and the additive element (M) as the essential components. The second cathode electrode of the present invention is subjected to the reduction treatment, and divalent copper for reduction is reduced to zerovalent copper or monovalent copper, and monovalent copper for reduction is reduced to zerovalent copper. Therefore, the second cathode electrode of the present invention is subjected to the reduction treatment to form a cathode electrode containing: copper containing zerovalent copper and monovalent copper and/or divalent copper; and at least one additive element (M) selected from the group consisting of aluminum (Al), boron (B), gallium (Ga), zinc (Zn), titanium (Ti), and silicon (Si).

In the second cathode electrode, cuprous oxide (Cu₂O) can be mentioned as the monovalent copper, and copper oxide (CuO) can be mentioned as the divalent copper. A copper single substance can be mentioned as the zerovalent copper.

In the second cathode electrode of the present invention, by containing the copper (Cu) containing monovalent copper and/or divalent copper and the additive element (M) as the essential components, the existing ratio between zerovalent copper and monovalent copper is optimized even with the reduction reaction of carbon dioxide sustained over a long term to sustain generation and stabilization of the C-C bond, and thereby the catalytic reaction producing an olefinic hydrocarbon such as ethylene and an alcohol such as ethanol by the reduction reaction of carbon dioxide can be stably sustained over a long term.

An aspect of at least one additive element (M) selected from the group consisting of aluminum (Al), boron (B), gallium (Ga), zinc (Zn), titanium (Ti), and silicon (Si) in the cathode electrode is not particularly limited. For example, an aspect of the additive element itself (additive element single substance) can be mentioned. **In** addition to the aspect of the additive element itself, an aspect of hydroxide and an aspect of oxide can be mentioned. In the additive element (M), the aspect of additive element itself, the aspect of hydroxide, and the aspect of oxide may be mixed.

A content of the additive element (M) is not particularly limited, but the lower limit thereof is preferably a proportion of 0.10 atom%, and more preferably a proportion of 0.20 atom% relative to 100 atom% of copper element including all copper of zerovalent copper, monovalent copper, divalent copper, and the like from the viewpoint of ability to further stably sustain the catalytic reaction producing an olefinic hydrocarbon such as ethylene and an alcohol such as ethanol by the reduction reaction of carbon dioxide over a long term by certainly optimizing the existing ratio between zerovalent copper and monovalent copper even with the reduction reaction of carbon dioxide sustained over a long term. From the viewpoint of ability to further stably sustain the catalytic reaction producing an olefinic hydrocarbon such as ethylene and an alcohol such as ethanol by the reduction reaction of carbon dioxide over a long term by keeping the existing ratio between zerovalent copper and monovalent copper within a further optimal range even with the reduction reaction of carbon dioxide sustained over a long term, the lower limit is particularly preferably a proportion of 0.25 atom%. Meanwhile, an upper limit of the content of the additive element (M) is preferably a proportion of 1.0 atom%, and more preferably a proportion of 0.85 atom% relative to 100 atom% of copper element including all copper of zerovalent copper, monovalent copper, divalent copper, and the like, from the viewpoint of ability to further stably sustain the catalytic reaction producing an olefinic hydrocarbon such as ethylene and an alcohol such as ethanol by the reduction reaction of carbon dioxide over a long term by certainly optimizing the existing ratio between zerovalent copper and monovalent copper even with the reduction reaction of carbon dioxide sustained over a long term. From the viewpoint of ability to further stably sustain the catalytic reaction producing an olefinic hydrocarbon such as ethylene and an alcohol such as ethanol by the reduction reaction of carbon dioxide over a long term by keeping the existing ratio between zerovalent copper and monovalent copper within a further optimal range even with the reduction reaction of carbon dioxide sustained over a long term, the upper limit is particularly preferably a proportion of 0.70 atom%.

As the additive element (M), any of aluminum (Al), boron (B), gallium (Ga), zinc (Zn), titanium (Ti), and silicon (Si) can be used because any of them is easily oxidized compared with the copper (Cu), and tends to have high compatibility to oxygen compared with the copper (Cu). Meanwhile, among these additive elements (M), aluminum (Al) is preferable from the viewpoint of the certainly optimized existing ratio between zerovalent copper and monovalent copper even with the reduction reaction of carbon dioxide sustained over a long term by certainly obtaining the function of appropriately holding oxygen in the cathode electrode and thereby the catalytic reaction producing an olefinic hydrocarbon such as ethylene and an alcohol such as ethanol by the reduction reaction of carbon dioxide can be further stably sustained over a long term. These additive elements (M) may be used singly, or may be used in combinations of two or more thereof.

The first cathode electrode and the second cathode electrode of the present invention may contain as necessary at least one additional metal element (M1) selected from the group consisting of silver (Ag), gold (Au), palladium (Pd), and cadmium (Cd) as an optional component. Containing the additional metal element (M1) contributes to improvement of the stability of the reaction of producing an olefinic hydrocarbon such as ethylene and an alcohol such as ethanol on the cathode electrode, and contributes to improvement of reduction ability of the cathode electrode from CO₂ to CO.

An aspect of the additional metal element (M1) is not particularly limited. For example, an aspect of the metal itself (metal single substance) can be mentioned. **In** addition to the aspect of the metal itself (metal single substance), an aspect of hydroxide and an aspect of oxide can be mentioned. **In** the additional metal element (M1), the aspect of metal itself (metal single substance), the aspect of hydroxide, and the aspect of oxide may be mixed. These additional metal elements (M1) may be used singly, or may be used in combinations of two or more thereof. A content of the additional metal element (M1) is not particularly limited, but preferably within a range of 0.01 atom% or more and 10 atom% or less, and particularly preferably within a range of 0.1 atom% or more and 1.0 atom% or less relative to 100 atom% of copper element including all copper of zerovalent copper, monovalent copper, divalent copper, and the like.

The structure of the cathode electrode may be solid or porous, but a porous structure is preferred from the viewpoint of ability to further stably sustain the catalytic reaction producing an olefinic hydrocarbon such as ethylene and an alcohol such as ethanol over a long term by facilitation of contacting water and carbon dioxide in sites of the reduction reaction of carbon dioxide in the cathode electrode. A proportion of pores (porosity) in the porous structure is not particularly limited, but the lower limit thereof is preferably 1 vol%, and particularly preferably 10 vol% from the viewpoint of facilitation of penetration of carbon dioxide into the cathode electrode to further increase the production efficiencies of producing an olefinic hydrocarbon such as ethylene and an alcohol such as ethanol. Meanwhile, an upper limit of the porosity of the porous structure is preferably 99 vol%, and particularly preferably 90 vol% from the viewpoint of sustaining a surface area contributing to the catalytic reaction of the cathode electrode to further increase the production efficiencies of producing an olefinic hydrocarbon such as ethylene and an alcohol such as ethanol.

The cathode electrode of the present invention can produce an olefinic hydrocarbon such as ethylene and an alcohol such as ethanol by, for example, supplying gaseous carbon dioxide from one side of the cathode electrode and supplying water with a liquid phase from the other side of the cathode electrode, and reacting the gaseous carbon dioxide and the water with a catalytic action of the cathode electrode to electrically reduce the carbon dioxide.

### [Composite of Cathode Electrode and Substrate]

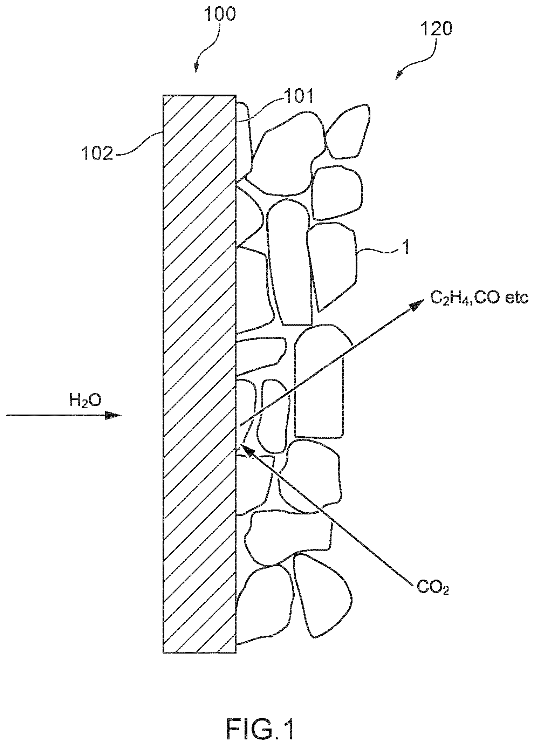

The cathode electrode of the present invention may be used in a state of the cathode electrode alone, and may be used in a state of forming a composite with a substrate as described below. FIG. 1 is an explanatory diagram illustrating an outline of a cross section of the composite of the cathode electrode and the substrate of the present invention.

As illustrated in FIG. 1, a composite 120 of a cathode electrode 100 and a substrate 1 has: the substrate 1; and the above cathode electrode 100 of the present invention disposed on the substrate 1. The cathode electrode 100 has a first portion 101 and a second portion 102 facing the first portion 101, and the substrate 1 is provided on the first portion 101 side of the cathode electrode 100. That is, the first portion 101 side of the cathode electrode 100 is disposed on the substrate 1. No substrate is provided on the second portion 102 side of the cathode electrode 100, and the second portion 102 is exposed to an external environment of the cathode electrode 100 and the composite 120. The cathode electrode 100 is a coating film coating a surface of the substrate 1. By containing the cathode electrode 100 of the present invention, the composite 120 of the cathode electrode 100 and the substrate 1 can yield the composite of the cathode electrode and the substrate that can stably sustain the catalytic reaction producing an olefinic hydrocarbon such as ethylene and an alcohol such as ethanol by the reduction reaction of carbon dioxide over a long term.

A structure of the cathode electrode 100 formed on the substrate 1 may be solid or porous, but as noted above, preferably a porous structure from the viewpoint of ability to further stably sustain the catalytic reaction producing an olefinic hydrocarbon such as ethylene and an alcohol such as ethanol over a long term by facilitation of contacting water and carbon dioxide in sites of the reduction reaction of carbon dioxide in the cathode electrode. The porous structure of the cathode electrode 100 can be formed by subjecting a cathode electrode having a solid structure to, for example, a partial reduction treatment, described later. In FIG. 1, for convenience of description, the cathode electrode 100 is not expressed as the porous structure.

The substrate 1 may be solid or porous, but preferably has a porous structure having gas permeability from the viewpoint of ability to further stably sustain the catalytic reaction producing an olefinic hydrocarbon such as ethylene and an alcohol such as ethanol over a long term even with gaseous carbon dioxide by smoothly contacting gaseous carbon dioxide with the cathode electrode.

A material of the substrate 1 having the porous structure is not particularly limited, but preferably, for example, carbon, a fluorine-containing resin, or a metal from the viewpoint of ability to obtain the composite of the cathode electrode and the substrate that can further stably sustain the catalytic reaction producing an olefinic hydrocarbon such as ethylene and an alcohol such as ethanol by the reduction reaction of carbon dioxide over a long term. As the fluorine-containing resin, polytetrafluoroethylene, polyvinylidene fluoride, perfluoroalkoxyalkane, perfluoroethylene-propylene copolymer, ethylene-tetrafluoroethylene copolymer, polychlorotrifluoroethylene, ethylene-chlorotrifluoroethylene copolymer, and the like can be mentioned, for example. As the metal, copper (Cu), niobium (Nb), aluminum (Al), titanium (Ti), an alloy containing one or more of the metals, a porous metal composed of metal such as stainless steel, and the like can be mentioned, for example. When the metal is copper (Cu), a sintered product of copper particles can be mentioned as the porous metal, for example.

An average thickness of the substrate 1 is not particularly limited, and a plate material with 0.2 mm or more and 1.5 mm or less can be mentioned, for example.

The cathode electrode 100 in the composite 120 of the cathode electrode 100 and the substrate 1 is, for example, a sputtering layer formed on the substrate 1 by sputtering and containing copper and the additive element (M). The cathode electrode 100 in the composite 120 of the cathode electrode 100 and the substrate 1 may be a coelectrodeposition layer formed by, for example, immersing the substrate 1 in a coelectrodeposition solution containing copper ions and ions of the additive element (M), and coelectrodepositing the copper component and the additive element (M) on the substrate 1.

### [Method of Manufacturing Composite of Cathode Electrode and Substrate]

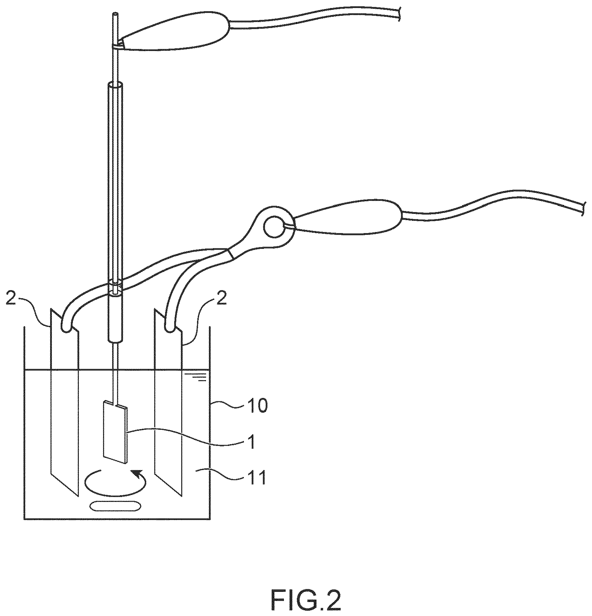

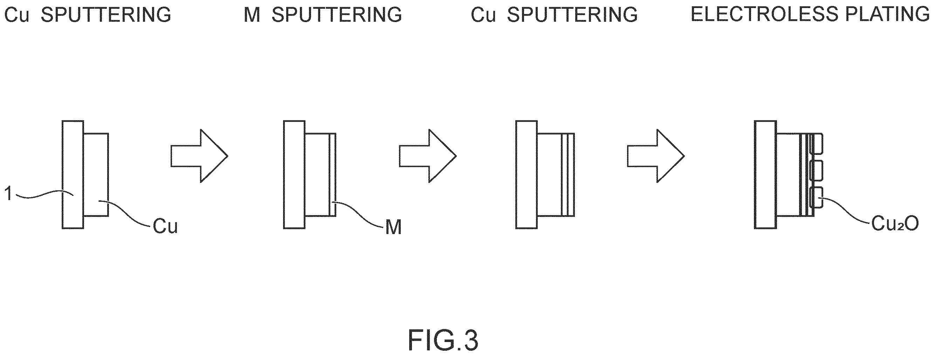

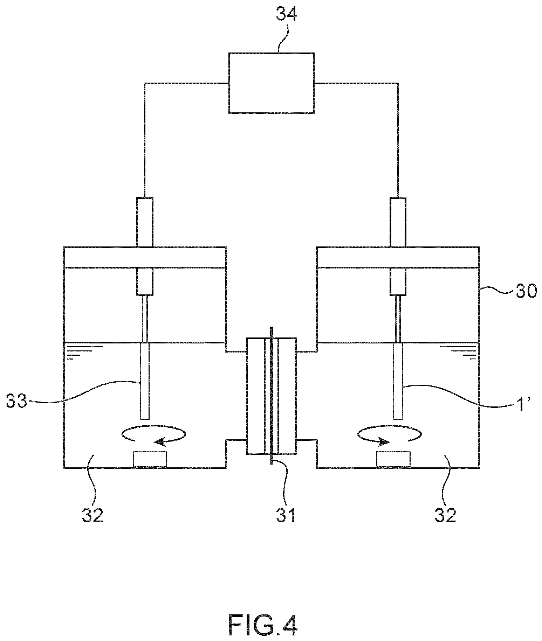

An example of a method of manufacturing the composite of the cathode electrode and the substrate will be described below. FIG. 2 is an explanatory diagram of the electropolishing treatment step in the method of manufacturing the composite of the cathode electrode and the substrate. FIG. 3 is an explanatory diagram of the sputtering layer forming step in the method of manufacturing the composite of the cathode electrode and the substrate. FIG. 4 is an explanatory diagram of the partial reduction step in the method of manufacturing the composite of the cathode electrode and the substrate.

The method of manufacturing the composite of the cathode electrode and the substrate comprises: (1) a step of providing a substrate (for example, a substrate having a porous structure); (2) an electropolishing treatment step of performing an electropolishing treatment on the provided substrate, if necessary; (3) a sputtering layer forming step of forming a sputtering layer containing copper (Cu) and at least one additive element (M) selected from the group consisting of aluminum (Al), boron (B), gallium (Ga), zinc (Zn), titanium (Ti), and silicon (Si) by sputtering on the substrate as necessary subjected to the electropolishing; (4) a copper oxidative-treatment step of further oxidizing at least a part of copper in the formed sputtering layer to monovalent copper and/or divalent copper, after the sputtering layer forming step if necessary; and (5) a partial reduction step of partially reducing monovalent copper and/or divalent copper oxidized in the copper oxidative-treatment step to zerovalent copper and/or monovalent copper. Among the above steps, the step (1) and the step (3) are essential steps, and the step (2), the step (4), and the step (5) are optional steps.

By the above method of manufacturing the composite of the cathode electrode and the substrate, the cathode electrode in which copper contains: zerovalent copper; and monovalent copper and/or divalent copper, or the cathode electrode in which copper contains: monovalent copper for reduction and/or divalent copper for reduction that are reduced to zerovalent copper by a reduction treatment; and monovalent copper and/or divalent copper that are not reduced to zerovalent copper can be formed on the substrate. By the above method of manufacturing the composite of the cathode electrode and the substrate, the composite that can stably sustain the catalytic reaction producing an olefinic hydrocarbon such as ethylene and an alcohol such as ethanol by the reduction reaction of carbon dioxide over a long term can be manufactured.

### (1) Step of Providing Substrate (for example, Substrate having Porous Structure)

The step of providing the substrate (for example, the substrate having a porous structure) is a step of providing the above substrate. A type of material of the substrate and a porosity of the porous structure can be appropriately selected depending on required characteristics of the composite of the cathode electrode and the substrate.

### (2) Electropolishing Treatment Step

The electropolishing treatment step is a step performed if necessary when metal is used as the material of the substrate, for example. In the electropolishing treatment step, the substrate surface is degreased with an organic solvent such as hexane, then washed and dried, thereafter as illustrated in FIG. 2, a mixed acid solution 11 is housed in a container 10, a substrate 1, which is a positive electrode, is immersed in the mixed acid solution 11, a negative electrode 2 is immersed at a position sandwiching the substrate 1, and an electrolysis potential is applied between the substrate 1, which is the positive electrode, and the negative electrode 2. By applying the electrolysis potential between the substrate 1, which is the positive electrode, and the negative electrode 2, the surface of the substrate 1 is electropolished. By electropolishing the surface of the substrate 1, the process-modified layer on the surface of the substrate 1 is decreased or removed. As the mixed acid solution 11, an aqueous mixed acid solution of phosphoric acid and sulfuric acid can be mentioned, for example. As the negative electrode 2, titanium and the like can be mentioned, for example.

### (3) Sputtering Layer Forming Step

As illustrated in FIG. 3, the sputtering layer forming step includes: a copper sputtering layer forming step of forming a sputtering layer containing copper on the substrate 1 by sputtering; and an additive element (M) sputtering layer forming step of forming a sputtering layer containing the additive element (M) on the copper sputtering layer by sputtering. If necessary, the sputtering layer forming step further includes a copper sputtering layer forming step of forming a sputtering layer containing copper on the formed additive element (M) sputtering layer by sputtering. By regulating electric power from a power source and a sputtering time, the content of the additive element (M) relative to 100 atom% of copper can be regulated. If necessary, the copper sputtering layer forming step and the additive element (M) sputtering layer forming step may be alternately performed a plurality of times to uniformize the presence of copper and the additive element (M) as the entirety of the sputtering layer. Via the sputtering layer forming step, the cathode electrode containing zerovalent copper, monovalent copper and/or divalent copper, and the additive element (M), or the cathode electrode containing monovalent copper for reduction and/or divalent copper for reduction that are reduced to zerovalent copper by a reduction treatment, monovalent copper and/or divalent copper that are not reduced to zerovalent copper, and the additive element (M) can be formed on the substrate 1.

### (4) Copper Oxidative-Treatment Step

The copper oxidative-treatment step is a step performed if necessary when the existing ratio of monovalent copper and/or divalent copper is regulated to a predetermined amount. As illustrated in FIG. 3, in the copper oxidative-treatment step, at least a part of zerovalent copper contained in the sputtering layer is oxidized to monovalent copper and/or divalent copper by subjecting the formed sputtering layer to an oxidation treatment by electroless plating. As the oxidation treatment by the electroless plating, an oxidative-treating method of immersing the sputtering layer in an aqueous copper sulfate solution can be mentioned, for example.

### (5) Partial Reduction Step

The partial reduction step is a step performed if necessary when monovalent copper and/or divalent copper oxidized in the copper oxidative-treatment step is reduced to zerovalent copper and/or monovalent copper to further optimize the existing ratio between zerovalent copper and monovalent copper. In the partial reduction step, as illustrated in FIG. 4, a composite 1', obtained by forming the sputtering layer on the substrate 1, and an anode electrode 33 are immersed in an aqueous solution 32 for the partial reduction housed in a two-chamber type electrolysis cell 30 having a diaphragm 31, by applying an electrolysis potential from a power source 34 to the two-chamber type electrolysis cell 30, and the partial reduction treatment is performed. By performing the partial reduction treatment, the sputtering layer can become porous. As the anode electrode 33, platinum can be mentioned, for example. As the aqueous solution 32 for the partial reduction, an aqueous potassium hydrogen carbonate solution can be mentioned on both the composite 1' side and the anode electrode side, for example.

### [Electrolytic Apparatus]

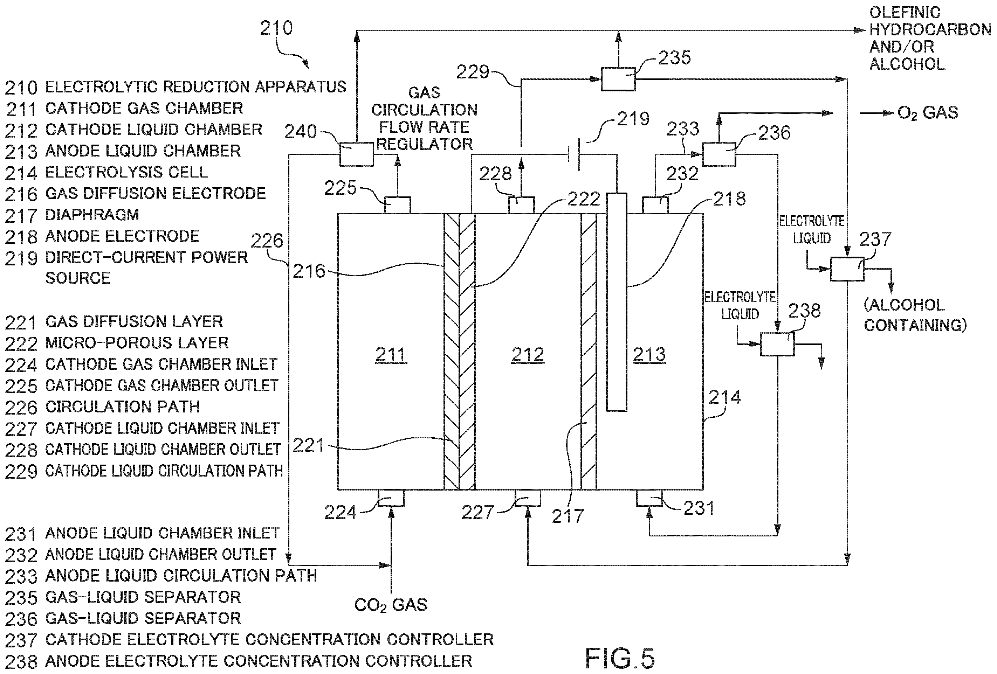

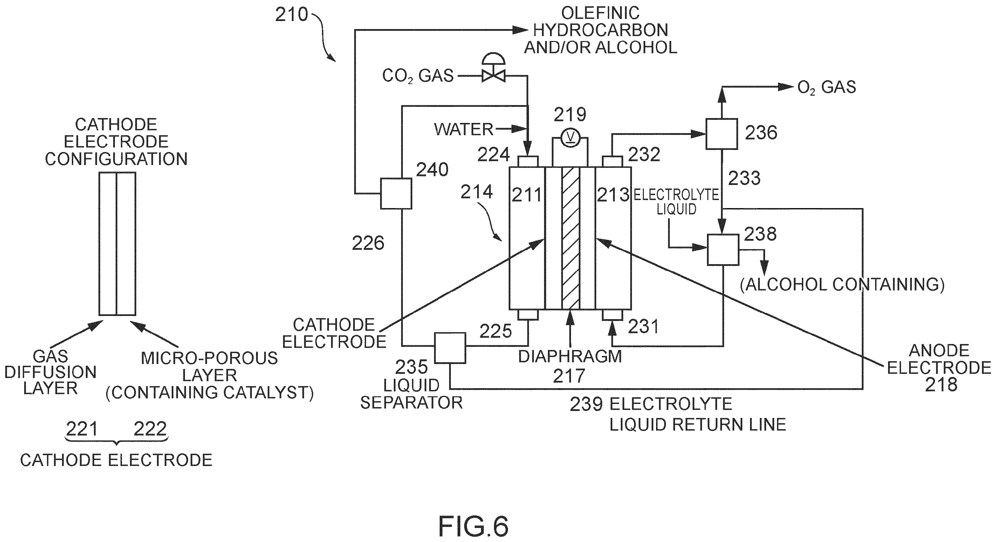

Thereafter, an electrolytic reduction apparatus that electrically reduces carbon dioxide to carbon monoxide, an olefinic hydrocarbon, and/or an alcohol, which has the cathode electrode of the present invention, and an electrolytic reduction apparatus that electrically reduces carbon dioxide to carbon monoxide, an olefinic hydrocarbon, and/or an alcohol, which has the composite of the cathode electrode and the substrate of the present invention, will be described below. FIG. 5 is an explanatory diagram illustrating an outline of the electrolytic reduction apparatus having the cathode electrode of the present invention. FIG. 6 is an explanatory diagram illustrating an outline of another electrolytic reduction apparatus having the cathode electrode of the present invention.

As illustrated in FIG. 5, as an electrolytic reduction apparatus 210, a three-chamber type electrolytic reduction apparatus can be mentioned, for example. Specifically, the electrolytic reduction apparatus 210 has, for example, an electrolysis cell 214 having a cathode gas chamber 211, a cathode liquid chamber 212, and an anode liquid chamber 213, which are divided from each other. The cathode gas chamber 211 and the cathode liquid chamber 212 are divided by a cathode 216 as a gas diffusion electrode. The cathode liquid chamber 212 and the anode liquid chamber 213 are divided by a diaphragm 217 having ion conductivity. An anode electrode 218 is disposed in the anode liquid chamber 213. Into the cathode gas chamber 211, carbon dioxide gas is supplied. Into the cathode liquid chamber 212, a cathode liquid is supplied. Into the anode liquid chamber 213, an anode liquid is supplied. The anode electrode 218 and the cathode 216 are connected to a direct-current power source 219.

The anode liquid and the cathode liquid are aqueous solutions in which an electrolyte is dissolved. The electrolyte contains at least one of potassium, sodium, lithium, or compounds of these, for example. The electrolyte contains at least one compound selected from the group consisting of LiOH, NaOH, KOH, Li₂CO₃, Na₂CO₃, K₂CO₃, LiHCO₃, NaHCO₃, and KHCO₃, for example.

The cathode 216 is a gas diffusion electrode, and has a gas diffusion layer 221 and a micro-porous layer 222. In the electrolytic reduction apparatus 210, the composite of the cathode electrode and the substrate of the present invention is used as the cathode 216, and the micro-porous layer 222 corresponds to the substrate of the composite. The gas diffusion layer 221 allows gas including carbon dioxide to permeate, but inhibits permeation of the aqueous solution including the cathode liquid. The micro-porous layer 222 allows both the gas including carbon dioxide and the aqueous solution including the cathode liquid to permeate. The gas diffusion layer 221 and the micro-porous layer 222 are each formed in a plane shape. The gas diffusion layer 221 is disposed on a side of the cathode gas chamber 211, and the micro-porous layer 222 is disposed on a side of the cathode liquid chamber 212.

As the gas diffusion layer 221, a layer in which a water-repellent coating such as polytetrafluoroethylene is formed on a surface of a porous conductive substrate such as carbon paper, carbon felt, and carbon cloth can be mentioned, for example. The conductive substrate is connected to a negative electrode of the direct-current power source 219, and electrons are supplied. The micro-porous layer 222 is formed on a surface of the gas diffusion layer 221 by using carbon, a fluorine-containing resin, a metal, or the like, and supports a catalyst. In the electrolytic reduction apparatus 210, the cathode electrode of the present invention is used as the catalyst that the micro-porous layer 222 supports. By using renewable energy as the direct-current power source 219 of the electrolytic reduction apparatus 210, an olefinic hydrocarbon such as ethylene and an alcohol such as ethanol can be produced by the reduction reaction of carbon dioxide while reducing the environmental load. A gas diffusion electrode in which a part of the micro-porous layer 222 functions as the gas diffusion layer 221 may be provided instead of the gas diffusion electrode having the gas diffusion layer 221 and the micro-porous layer 222.

As illustrated in FIG. 6, as the other electrolytic reduction apparatus 210, an electrolytic reduction apparatus 210 having an MEA-type electrolysis cell structure can be mentioned, for example. **In** the other electrolytic reduction apparatus 210 illustrated in FIG. 6, the same sign as in the electrolytic reduction apparatus 210 illustrated in FIG. 5 is made on the same configuration as the electrolytic reduction apparatus 210 illustrated in FIG. 5. Since using no cathode liquid, the electrolytic reduction apparatus 210 having the MEA-type electrolysis cell structure does not have the cathode liquid chamber 212. Therefore, the electrolytic reduction apparatus 210 having the MEA-type electrolysis cell structure has an electrolysis cell 214 having the cathode gas chamber 211 and the anode liquid chamber 213, which are divided from each other, instead of the electrolysis cell 214 having the cathode gas chamber 211, the cathode liquid chamber 212, and the anode liquid chamber 213, which are divided from each other. The cathode gas chamber 211 and the anode liquid chamber 213 are divided by the diaphragm 217 sandwiched by the cathode electrode and the anode electrode 218. The anode electrode 218 is disposed in the anode liquid chamber 213. Into the cathode gas chamber 211, carbon dioxide gas is supplied. Into the anode liquid chamber 213, an anode liquid is supplied. The anode electrode 218 and the cathode electrode are connected to a direct-current power source 219. **In** the electrolytic reduction apparatus 210 having the MEA-type electrolysis cell structure, the diaphragm 217 itself is used as an electrolyte to not use the cathode liquid, which is suitable for integration.

Also, in the electrolytic reduction apparatus 210 having the MEA-type electrolysis cell structure, the cathode electrode is the gas diffusion electrode, and has the gas diffusion layer 221 and the micro-porous layer 222. Also, in the electrolytic reduction apparatus 210 having the MEA-type electrolysis cell structure, the composite of the cathode electrode and the substrate of the present invention is used as the cathode electrode, and the micro-porous layer 222 corresponds to the substrate of the composite.

### Examples

Thereafter, Examples of the present invention will be described. The present invention is not limited to the following Examples.

### [Example 1]

### Preparation of Cathode Electrode

### Sputtering Layer Forming Step

A copper layer was formed on a substrate (porous carbon) by sputtering under a condition of DC 100 W, argon gas at 6.0 sccm, and 10 minutes to form a first copper sputtering layer. Thereafter, an aluminum layer was formed on the formed first copper sputtering layer by sputtering under a condition of DC 50 W, argon gas at 6.0 sccm, and 30 seconds to form an aluminum sputtering layer. Thereafter, a copper layer was formed on the formed aluminum sputtering layer by sputtering under a condition of DC 100 W, argon gas at 6.0 sccm, and 5 minutes to form a second copper sputtering layer, and a sputtering layer being a stacked body composed of the three layers was prepared.

### Copper Oxidative-Treatment Step

The sputtering layer being the stacked body obtained as above was immersed in an aqueous copper sulfate solution at 9.7 mM for electroless plating for 20 minutes, and a part of zerovalent copper contained in the copper sputtering layer was oxidized to monovalent copper and/or divalent copper.

As above, the cathode electrode being the sputtering layer was prepared on the substrate to manufacture a composite of a cathode electrode and a substrate.

A content of aluminum in the cathode electrode was 0.28 atom% relative to 100 atom% of copper element including all copper of zerovalent copper, monovalent copper, divalent copper, and the like. The content of aluminum was measured by using an inductively coupled plasma (ICP) emission spectrometer.

### [Example 2]

A composite of a cathode electrode and a substrate was manufactured in the same manner as in Example 1 except that the sputtering layer forming step was changed to the following step.

### Sputtering Layer Forming Step

A copper layer was formed on a substrate (porous carbon) by sputtering under a condition of DC 100 W, argon gas at 6.0 sccm, and 5 minutes to form a first copper sputtering layer. Thereafter, an aluminum layer was formed on the formed first copper sputtering layer by sputtering under a condition of DC 50 W, argon gas at 6.0 sccm, and 30 seconds to form a first aluminum sputtering layer. Thereafter, a copper layer was formed on the formed first aluminum sputtering layer by sputtering under a condition of DC 100 W, argon gas at 6.0 sccm, and 5 minutes to form a second copper sputtering layer. Thereafter, an aluminum layer was formed on the formed second copper sputtering layer by sputtering under a condition of DC 50 W, argon gas at 6.0 sccm, and 30 seconds to form a second aluminum sputtering layer. Thereafter, a copper layer was formed on the formed second aluminum sputtering layer by sputtering under a condition of DC 100 W, argon gas at 6.0 sccm, and 5 minutes to form a third copper sputtering layer, and a sputtering layer being a stacked body composed of the five layers was prepared.

### [Example 3]

A composite of a cathode electrode and a substrate was manufactured in the same manner as in Example 1 except that the sputtering layer forming step was changed to the following step.

### Sputtering Layer Forming Step

A copper layer was formed on a substrate (porous carbon) by sputtering under a condition of DC 100 W, argon gas at 6.0 sccm, and 3.75 minutes to form a first copper sputtering layer. Thereafter, an aluminum layer was formed on the formed first copper sputtering layer by sputtering under a condition of DC 50 W, argon gas at 6.0 sccm, and 30 seconds to form a first aluminum sputtering layer. Thereafter, a copper layer was formed on the formed first aluminum sputtering layer by sputtering under a condition of DC 100 W, argon gas at 6.0 sccm, and 3.75 minutes to form a second copper sputtering layer. Thereafter, an aluminum layer was formed on the formed second copper sputtering layer by sputtering under a condition of DC 50 W, argon gas at 6.0 sccm, and 30 seconds to form a second aluminum sputtering layer. Thereafter, a copper layer was formed on the formed second aluminum sputtering layer by sputtering under a condition of DC 100 W, argon gas at 6.0 sccm, and 3.75 minutes to form a third copper sputtering layer. Thereafter, an aluminum layer was formed on the formed third copper sputtering layer by sputtering under a condition of DC 50 W, argon gas at 6.0 sccm, and 30 seconds to form a third aluminum sputtering layer. Thereafter, a copper layer was formed on the formed third aluminum sputtering layer by sputtering under a condition of DC 100 W, argon gas at 6.0 sccm, and 3.75 minutes to form a fourth copper sputtering layer, and a sputtering layer being a stacked body composed of the seven layers was prepared.

### [Example 4]

A composite of a cathode electrode and a substrate was manufactured in the same manner as in Example 1 except that the sputtering layer forming step was changed to the following step.

### Sputtering Layer Forming Step

A copper layer was formed on a substrate (porous carbon) by sputtering under a condition of DC 100 W, argon gas at 6.0 sccm, and 2.5 minutes to form a first copper sputtering layer. Thereafter, an aluminum layer was formed on the formed first copper sputtering layer by sputtering under a condition of DC 50 W, argon gas at 6.0 sccm, and 30 seconds to form a first aluminum sputtering layer. Thereafter, a copper layer was formed on the formed first aluminum sputtering layer by sputtering under a condition of DC 100 W, argon gas at 6.0 sccm, and 2.5 minutes to form a second copper sputtering layer. Thereafter, an aluminum layer was formed on the formed second copper sputtering layer by sputtering under a condition of DC 50 W, argon gas at 6.0 sccm, and 30 seconds to form a second aluminum sputtering layer. Thereafter, a copper layer was formed on the formed second aluminum sputtering layer by sputtering under a condition of DC 100 W, argon gas at 6.0 sccm, and 2.5 minutes to form a third copper sputtering layer. Thereafter, an aluminum layer was formed on the formed third copper sputtering layer by sputtering under a condition of DC 50 W, argon gas at 6.0 sccm, and 30 seconds to form a third aluminum sputtering layer. Thereafter, a copper layer was formed on the formed third aluminum sputtering layer by sputtering under a condition of DC 100 W, argon gas at 6.0 sccm, and 2.5 minutes to form a fourth copper sputtering layer. Thereafter, an aluminum layer was formed on the formed fourth copper sputtering layer by sputtering under a condition of DC 50 W, argon gas at 6.0 sccm, and 30 seconds to form a fourth aluminum sputtering layer. Thereafter, a copper layer was formed on the formed fourth aluminum sputtering layer by sputtering under a condition of DC 100 W, argon gas at 6.0 sccm, and 2.5 minutes to form a fifth copper sputtering layer, and a sputtering layer being a stacked body composed of the nine layers was prepared.

### [Comparative Example 1]

A composite of a cathode electrode and a substrate was manufactured in the same manner as in Example 1 except that the aluminum sputtering layer and the second copper sputtering layer were not formed. From the above, Comparative Example 1 was an aspect in which the cathode electrode did not contain aluminum.

The type of the additive element and the content rate of the additive element relative to 100 atom% of copper of Examples 1 to 4 and Comparative Example 1 are shown in the following Table 1.

### Evaluation Items

### [Stability Test]

A ratio R (unit: %) (R = (E24/E_{MAX})x100) of an ethylene gas selectivity 24 hours (E24) after the beginning of the carbon dioxide reduction reaction relative to a maximum value (E_{MAX}) of ethylene gas selectivities from immediately after the beginning of the carbon dioxide reduction reaction to 24 hours after the beginning of the carbon dioxide reduction reaction was measured. A ratio R of 80% or more was evaluated that the catalytic reaction producing ethylene by the reduction reaction of carbon dioxide can be stably sustained over a long term to be excellent stability of the catalytic reaction. The ethylene gas selectivity was evaluated as follows.

### [Ethylene Gas Selectivity (%)]

From a concentration of ethylene contained in an output gas of the electrolysis cell and the gas flow rate, the number of moles of ethylene and the number of moles of required electrons per unit time were calculated. Meanwhile, from the set current value of the potential applying apparatus, the number of moles of electrons that passed through the electrolysis cell per unit time was calculated. A proportion of the former to the latter was evaluated as the ethylene selectivity (%). The concentration of ethylene contained in the output gas was measured by using a gas chromatograph (model number: Agilent 990 micro GC). The gas flow rate was measured by using a mass flow meter.

The cathode electrode of Example 2 was subjected to a carbon dioxide reduction reaction test (carbon dioxide electrolytic reduction test) by using an aqueous KHCO₃ solution at 1 M (pH 8 to 9) for an electrolyte liquid with a three-electrode system in which the cathode electrode of Example 2, a reversible hydrogen electrode (RHE), and a Pt mesh electrode as a counter electrode were connected to an electrochemical measurement system (Hokuto Denko Corporation, HZ-7000). The gas-phase product was quantified by online analysis using a micro-GC (GL Sciences Inc., Agilent 990 Micro Gas Chromatograph (GC)), and the liquid-phase product was quantified by collecting the reaction liquid after the reaction was finished and with an FID-GC (Agilent Technologies, 8890 Gas Chromatograph (GC)). From the above, a Faraday efficiency of ethylene from the beginning of the test (0 hours) to 24 hours and Faraday efficiencies of ethanol and formic acid after 24 hours in the carbon dioxide reduction reaction test were measured. The faraday efficiency was calculated from a proportion of a total amount of electrons that flowed during the carbon dioxide reduction reaction test and an amount of the produced gas quantified with the gas chromatograph.

Measurement results of Examples and Comparative Example are shown in the following Table 1.

**[Table 1]**

| | Additive element | Content rate of additive element to Cu (atom%) | Ratio of ethylene gas selectivity after 24 hours relative to ethylene gas selectivity immediately after the beginning in carbon dioxide reduction reaction (R: unit %) |
|---|---|---|---|
| Comparative Example 1 | - | - | 67 |
| Example 1 | Al | 0,28 | 97 |
| Example 2 | Al | 0,42 | 97 |
| Example 3 | Al | 0,53 | 97 |
| Example 4 | Al | 0,68 | 87 |

As shown in Table 1, in Examples in which the cathode electrode contained aluminum being the additive element in addition to copper, the ratio R of the ethylene gas selectivity after 24 hours (E24) relative to the maximum value (E_{MAX}) of the ethylene gas selectivities from immediately after the beginning of the carbon dioxide reduction reaction to 24 hours after the beginning of the carbon dioxide reduction reaction was 80% or more, the catalytic reaction producing ethylene by the reduction reaction of carbon dioxide was stably sustained over a long term, and the stability of the catalytic reaction was excellent.

Particularly, in Examples 1 to 4 in which aluminum was contained at a proportion of 0.28 atom% or more and 0.68 atom% or less relative to 100 atom% of copper, the ratio R was 87% or more, the catalytic reaction producing ethylene was able to be further stably sustained over a long term, and the stability of the catalytic reaction was further improved.

In the cathode electrode of Example 2, the Faraday efficiency of ethylene gradually increased from the beginning of the carbon dioxide reduction reaction test, and became the maximum, 48%, after about 10 hours. Even after about 10 hours from the carbon dioxide reduction reaction test, the Faraday efficiency of ethylene did not exhibit considerable decreasing tendency, and the Faraday efficiency of as high as 47% was able to be obtained even after 24 hours from the carbon dioxide reduction reaction test. The electrolyte liquid was analyzed after 24 hours from the carbon dioxide reduction reaction test, and as a result, the Faraday efficiencies of ethanol and formic acid were respectively 22% and 0.4%. From the above, the Faraday efficiency of the C2 component was confirmed to reach about 70% at least over 24 hours from the beginning of the carbon dioxide reduction reaction test. From energy-dispersive X-ray spectrometry (SEM-EDX) analysis, reduction of Cu₂O, which were conventionally remarkable, was confirmed to be inhibited by adding Al. Thereby, keeping the oxygen content in the cathode electrode by adding Al is considered to be a cause of holing the Faraday efficiency of ethylene to be the high value over a long time.

Meanwhile, in Comparative Example 1 in which the cathode electrode did not contain aluminum being the additive element, the ratio R was 67%, and the catalytic reaction producing ethylene by the reduction reaction of carbon dioxide was not evaluated to be stably sustained over a long term.

### Industrial Applicability

The cathode electrode of the present invention can sustain the catalytic reaction producing the olefinic hydrocarbon such as ethylene and the alcohol such as ethanol by the reduction reaction of carbon dioxide over a long term; thus, it has high utility value in the field where carbon dioxide in the atmosphere is absorbed and recovered to produce industrially useful organic compounds from the carbon dioxide.

### List of Reference Signs

1 substrate
100 cathode electrode
120 composite

## Claims

1. A cathode electrode that electrically reduces carbon dioxide, comprising:
copper; and at least one additive element selected from the group consisting of aluminum, boron, gallium, zinc, titanium, and silicon,
wherein the copper contains: zerovalent copper; and monovalent copper and/or divalent copper.

2. A cathode electrode that electrically reduces carbon dioxide, comprising:
copper; and at least one additive element selected from the group consisting of aluminum, boron, gallium, zinc, titanium, and silicon,
wherein the copper contains: monovalent copper for reduction and/or divalent copper for reduction that are reduced to zerovalent copper by a reduction treatment; and monovalent copper and/or divalent copper that are not reduced to zerovalent copper.

3. The cathode electrode according to claim 1 or 2, wherein the additive element is contained at 0.10 atom% or more and 1.0 atom% or less relative to 100 atom% of the copper.

4. The cathode electrode according to claim 1 or 2, wherein the additive element is contained at 0.25 atom% or more and 0.70 atom% or less relative to 100 atom% of the copper.

5. The cathode electrode according to claim 1 or 2, wherein the additive element contains aluminum.

6. The cathode electrode according to claim 1 or 2, wherein the cathode electrode has a porous structure.

7. A composite of a cathode electrode and a substrate, comprising: a substrate; and the cathode electrode according to claim 1 or 2 disposed on the substrate.

8. The composite according to claim 7, wherein the substrate has a porous structure.

9. The composite according to claim 8, wherein a material of the substrate having the porous structure is carbon.

10. The composite according to claim 8, wherein a material of the substrate having the porous structure is a fluorine-containing resin.

11. The composite according to claim 8, wherein a material of the substrate having the porous structure is a metal.

12. The composite according to claim 11, wherein the metal is copper.

13. The composite according to claim 11, wherein the metal is a sintered product of copper particles.

14. An electrolytic reduction apparatus that electrically reduces carbon dioxide to carbon monoxide, an olefinic hydrocarbon, and/or an alcohol, comprising the cathode electrode according to claim 1 or 2.

15. An electrolytic reduction apparatus that electrically reduces carbon dioxide to carbon monoxide, an olefinic hydrocarbon, and/or an alcohol, comprising the composite according to claim 7.

16. A method of manufacturing a composite of a cathode electrode and a substrate that electrically reduces carbon dioxide, comprising:
a step of providing a substrate having a porous structure; and
a step of forming a cathode electrode including a sputtering layer forming step of forming a sputtering layer containing copper and at least one additive element selected from the group consisting of aluminum, boron, gallium, zinc, titanium, and silicon on the substrate by sputtering, wherein the copper contains: zerovalent copper; and monovalent copper and/or divalent copper.

17. A method of manufacturing a composite of a cathode electrode and a substrate that electrically reduces carbon dioxide, comprising:
a step of providing a substrate having a porous structure; and
a step of forming a cathode electrode including a sputtering layer forming step of forming a sputtering layer containing copper and at least one additive element selected from the group consisting of aluminum, boron, gallium, zinc, titanium, and silicon on the substrate by sputtering, wherein the copper contains: monovalent copper for reduction and/or divalent copper for reduction that are reduced to zerovalent copper by a reduction treatment; and monovalent copper and/or divalent copper that are not reduced to zerovalent copper.

18. The method of manufacturing a composite according to claim 16 or 17, further comprising a copper oxidative-treatment step of oxidizing at least a part of the copper in the sputtering layer to the monovalent copper and/or the divalent copper after the sputtering layer forming step.

19. The method of manufacturing a composite according to claim 18, further comprising a partial reduction step of partially reducing the monovalent copper and/or the divalent copper oxidized in the copper oxidative-treatment step to zerovalent copper and/or monovalent copper.

20. The method of manufacturing a composite according to claim 18, wherein the copper oxidative-treatment step is electroless plating.

21. The method of manufacturing a composite according to claim 16 or 17, wherein the sputtering layer forming step includes: a copper sputtering layer forming step of forming a sputtering layer containing the copper by sputtering; and an additive element sputtering layer forming step of forming a sputtering layer containing the additive element on the copper sputtering layer by sputtering.

22. The method of manufacturing a composite according to claim 21, further comprising a copper sputtering layer forming step of forming a sputtering layer containing the copper on the additive element sputtering layer by sputtering.
